# EUROPÄISCHE PATENTANMELDUNG

(11) **EP 3 588 665 A1**
(43) Veröffentlichungstag der Anmeldung: **01.01.2020**
(21) Anmeldenummer: 18180829.6
(22) Anmeldetag: 29.06.2018
(51) Int. Cl.: H01M 10/653, H01M 10/6552

(54) **VORRICHTUNG ZUM ABLEITEN VON WÄRME AUS EINER ANORDNUNG AUS WIEDERAUFLADBAREN ELEKTROCHEMISCHEN ENERGIESPEICHERN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der vorliegenden Erfindung ist eine Vorrichtung zum Ableiten von Wärme aus einer Anordnung aus wiederaufladbaren elektrochemischen Energiespeichern. Diese Vorrichtung umfasst eine Heatpipe und ein Wärmeeinkoppelelement. Gegenstand der vorliegenden Erfindung ist auch eine Anordnung aus wiederaufladbaren elektrochemischen Energiespeichern, die die erfindungsgemäße Vorrichtung umfasst.

## Beschreibung

Gegenstand der vorliegenden Erfindung ist eine Vorrichtung zum Ableiten von Wärme aus einer Anordnung aus wiederaufladbaren elektrochemischen Energiespeichern. Diese Vorrichtung umfasst eine Heatpipe und ein Wärmeeinkoppelelement. Gegenstand der vorliegenden Erfindung ist auch eine Anordnung aus wiederaufladbaren elektrochemischen Energiespeichern, die die erfindungsgemäße Vorrichtung umfasst.

Im Sinne der vorliegenden Erfindung wird unter einem wiederaufladbaren elektrochemischen Energiespeicher eine galvanische Sekundärzelle verstanden; nachfolgend wird eine solche galvanische Sekundärzelle auch Akkumulator oder kurz Akku genannt. Insbesondere handelt es sich bei einem solchen Akku um eine Lithiumionenbatterie oder eine Natrium-Nickelchlorid-Zelle, auch als ZEBRA-Batterie (englisch Zero Emission Battery Research Activities). Eine Anordnung aus zwei oder mehr Akkus, die elektrisch miteinander verschaltet werden können, wird auch Akkupack genannt. Die elektrische Verschaltung kann dabei in Reihe oder parallel erfolgen. So können alle Akkus in Reihe geschaltet sein oder es können alle Akkus parallel geschaltet sein. Bei genügender Anzahl von Akkus in einen Akkupack können auch Teilmengen dieser Anzahl von Akkus jeweils in Reihe geschaltet sein, während diese Teilmengen dann zueinander parallel geschaltet sind, oder es können auch Teilmengen dieser Anzahl von Akkus jeweils parallel geschaltet sein, während diese Teilmengen dann zueinander in Reihe verschaltet sind.

Die Akkus eines Akkupacks, wie er unter anderem zum Antrieb von elektrisch angetriebenen Fahrzeugen verwendet werden, sind bevorzugt als im Wesentlichen kreiszylinderförmige Körper ausgebildet, deren Höhe mindestens so groß ist wie der Kreisdurchmesser des Kreiszylinders. Ebenfalls bevorzugt sind alle Akkus eines Akkupacks gleich ausgestaltet. Um Platz zu sparen, also einen kompakten Akkupack, in anderen Worten einen Akkupack mit kompakter Bauweise, zur Verfügung zu stellen, sind die Akkus eines Akkupacks räumlich zueinander nah benachbart angeordnet. So beträgt kleinste Abstand zwischen zwei Akkus in einem Akkupack weniger als 10 %, oft weniger als 5 % der Kreisdurchmesser der benachbarten Zylinder, insbesondere maximal 3 mm, bevorzugt zwischen 1,5 bis 0,5 mm, besonders bevorzugt etwa 0,75 mm. Dabei sind bevorzugt die Akkus parallel zueinander so angeordnet, dass ihre oberen Kreisflächen jeweils in derselben Ebene und ihre unteren Kreisflächen jeweils in derselben Ebene liegen. Weiterhin bevorzugt sind die Akkus im Akkupack analog der kubisch primitiven oder analog der hexagonal dichtesten Kugelpackung angeordnet.

Die Elektroden eines Akkus sind dabei meist so angeordnet, dass sich eine Elektrode, in aller Regel die Anode, auf einer der Kreisflächen des Akkus und einem dieser Kreisfläche unmittelbar benachbarten Teilbereich der Mantelfläche des Akkus befindet, wobei die Stromabnahme hier beispielsweise durch einen angeschweißten Draht, oft auch Fähnchen genannt erfolgen kann. Die andere, entgegengesetzt geladene Elektrode, in aller Regel die Kathode, befindet sich dann auf dem verbleibenden Bereich der Mantelfläche des Akkus, wobei die Stromabnahme dort beispielsweise durch einen angeschweißten Draht erfolgen kann. Die beiden entgegensetzt geladenen Elektroden sind dabei in geeigneter Weise voneinander elektrisch isoliert. Die Ausdehnung Elektrode, die sich auf dem verbleibenden Bereich der Mantelfläche befindet, nimmt in Höhenrichtung des Mantels mindestens 50 %, bevorzugt mindestens 60 %, besonders bevorzugtmindestens 70 % der Höhe der Mantelfläche ein. Bevorzugt haben alle Akkus eines Akkupacks die gleiche Polung und gleiche Ausrichtung ihrer Elektroden.

Damit die Akkus eines Akkupacks in der gewünschten Anordnung zueinander verbleiben, sind diese in aller Regel in einem Zellhalter angeordnet.

Beim Aufladen eines Akkus wird elektrische Energie in chemische Energie umgewandelt, beim Entladen eines Akkus, also bei Stromabnahme, wird chemische Energie in elektrische Energie in umgewandelt. Es sei angemerkt, dass der Begriff "Strom" im Sinne der vorliegenden Erfindung immer den elektrischen Strom bezeichnet, sofern nicht anders angegeben.

Bei allen Umwandlungen von einer Energieform in eine andere kommt es zu Energieverlusten. Dieser Energieverlust macht sich in aller Regel durch die Abstrahlung von Wärme bemerkbar, die sich wiederum in einer Temperaturerhöhung äußert. Diese Temperaturerhöhung ist umso größer, je schneller diese Energieumwandlung erfolgt und je schlechter die entstehende Wärme abgeführt werden kann.

Im Falle eines Akkupacks erfolgt eine große Wärmeentwicklung insbesondere dann, wenn die Akkus des Akkupacks in sehr kurzer Zeit aufgeladen werden oder eine hohe Abgabe von elektrischer Energie in sehr kurzer Zeit erfolgt. Der Begriff "in sehr kurzer Zeit" ist dabei so zu verstehen, dass der Lade- bzw. Entladestrom eines Akku mindestens doppelt so groß ist wie der Strom, mit dem dieser Akku im Regelbetrieb aufgeladen werden soll. Auf Grund der kompakten Bauweise eines Akkupacks wird die entstehende Wärme nur schlecht abgeführt. Weder die dem Akkupack innewohnenden natürliche Fähigkeit zur Konvektion noch die dem Akkupack innewohnenden natürliche Fähigkeit zur Wärmeleitung sind dafür ausreichend. Die durch die schlechte Wärmeabführung erfolgende Temperaturerhöhung führt zu Schäden an den Akkus, die von der Verringerung der Leistung über die Verringerung der Lebensdauer bis zum Ausfall eines oder mehrerer der Akkus führen können.

Insbesondere schädlich sind dabei Temperaturen ab 60 °C. Auch sind Temperaturdifferenzen ab 4 K innerhalb eines Akkupacks für Akkus, insbesondere für Lithiumionenbatterien, schädlich.

In aller Regel befindet sich ein Akkupack darüber hinaus in einem Gehäuse, einerseits um das Akkupack vor äußeren Einflüssen - beispielsweise Witterungseinflüssen oder mechanischen Belastungen - zu schützen, andererseits um beispielsweise Personen vor dem Berühren der Elektroden und damit der Gefahr von Stromschlägen zu schützen. Dieses Gehäuse erschwert es zusätzlich, die entstehende Wärme abzuführen, da es Konvektion und Wärmeleitung behindert.

Eine Zwangskonvektion des Akkupacks, beispielsweise durch ein Zwangsbelüftung, insbesondere durch einen Ventilator, hat sich als unzweckmäßig herausgestellt, da dies den Vorteil der kompakten Bauweise des Akkupacks wieder mehr als zunichtemacht.

Diese Beschränkungen zur Abführung von Wärme vom Akkupack behindern den Einsatz solcher Akkupacks in Automobilen, die ganz oder teilweise durch Strom angetrieben werden. Solche Automobile, die ganz oder teilweise durch Strom angetrieben werden, werden nachfolgend auch Elektromobile genannt. Für die erfolgreiche Einführung von Elektromobilen ist es erforderlich, dass hocheffiziente Akkupacks vorhanden sind, die den Elektromobilen eine Reichweite und eine Aufladegeschwindigkeit ermöglichen, die der Reichweite und der Betankungsgeschwindigkeit von entsprechenden Automobilen, die ausschließlich durch einen Verbrennungsmotor angetrieben werden, zumindest weitgehend entsprechen. Für die Reichweite eines Elektromobils bedeutet das, dass sie mindestens 30 %, bevorzugt mindestens 40 %, besonders bevorzugt mindestens 50 % der Reichweite von entsprechenden Automobilen, die ausschließlich durch einen Verbrennungsmotor angetrieben werden, beträgt. Für die Aufladegeschwindigkeit des Akkupacks eines Elektromobils bedeutet dies, dass sie maximal 30 Minuten, bevorzugt maximal 20 Minuten, besonders bevorzugt maximal 15 Minuten beträgt.

Dabei ist festzustellen, dass Elektromobile bezüglich der Motorleistung entsprechenden Automobilen, die ausschließlich durch einen Verbrennungsmotor angetrieben werden, heute schon zumindest ebenbürtig sind.

Eine Zwangskonvektion des Akkupacks, beispielsweise durch ein Zwangsbelüftung, insbesondere durch einen Ventilator, hat sich als unzweckmäßig herausgestellt, da dies den Vorteil der kompakten Bauweise des Akkupacks wieder mehr als zunichtemacht. Auch hat sich herausgestellt, dass bei einer solchen Zwangskonvektion die eintretenden Luft in den Zwischenräumen zwischen den einzelnen Akkus verwirbelt wird, sich daher keine Strömungskanäle ausbilden können, sondern sich im Gegenteil ein der weiteren Luftzufuhr entgegengesetzter Staudruck ausbildet. Dies behindert die Kühlung des Akkupacks zusätzlich.

Das Problem, dass eine Verwirbelung der eintretenden Luft in den Zwischenräumen zwischen den einzelnen Akkus auftritt und die daraus oben geschilderten Folgen auftreten, stellt sich auch, wenn ein in einem Elektromobils eingebautes Akkupack durch Fahrwind gekühlt werden soll. Eine solche unmittelbare Kühlung eines Akkupacks durch Fahrtwind wird auch als Zwangskonvektion verstanden.

Die WO2010060856A1 schlägt als Lösung des Problems vor, eine zwischen den Akkus eines Akkupacks frei fließende Temperierflüssigkeit vorzusehen, um ein Akkupack zu temperieren. In einer solchen Temperierflüssigkeit ist dann eine Heatpipe eingebracht, um die im Akkupack entstehende Wärme nach außen abzuleiten. Diese Lösung hat aber den Nachteil, dass die Temperaturflüssigkeit auslaufen und Schäden verursachen kann, wenn ein Elektromobil, das ein mit einer solchen Temperierflüssigkeit ausgerüstetes Akkupack aufweist, verunfallt. Auch ist es bei einer solchen Anordnung schwierig, beispielsweise ein Akkupack mit entladenen Akkus gegen ein Akkupack mit geladenen Akkus auszutauschen, weil ein solches Akkupack zum einen schwerer ist, zum anderen es bei Undichtigkeiten zum Auslaufen der Temperierflüssigkeit kommen kann.

Die WO2017182156A1 schlägt als Lösung des Problems vor, Thermopads, beispielsweise aus Silikon oder Acryl, vorzusehen, um Wärme von einem Akku oder mehreren Akkus eines Akkupacks auf eine Heatpipe zu übertragen und dann wieder von dieser Heatpipe auf einen Gehäusedeckel und von dort an die Umgebung zu übertragen. Diese Lösung verhindert zwar, dass eine Temperaturflüssigkeit auslaufen und Schäden verursachen kann, wenn ein Automobil, das ein mit einer solchen Temperierflüssigkeit ausgerüstetes Akkupack aufweist, verunfallt, da keine solche Temperierflüssigkeit vorhanden ist, jedoch sind zum einen die Wärmeleitfähigkeiten der in der WO2017182156A1 vorgeschlagenen Materialien für die Thermopads sehr gering, was die Wärmeübertragung auf oder von der Heatpipe wenig wirksam macht, zum anderen ist die in der WO2017182156A1 vorgeschlagene räumliche Anordnung der Thermopads zur Heatpipe wenig für eine wirksame Wärmeübertragung auf oder von der Heatpipe geeignet.

Aufgabe der vorliegenden Erfindung ist es daher, eine Vorrichtung zur Verfügung zu stellen, die die Nachteile des Stands der Technik überwindet.

Insbesondere Aufgabe der vorliegenden Erfindung ist es, eine Vorrichtung zur Verfügung zu stellen, die es ermöglicht, zum einen schneller Wärme aus einem Akkupack abzuführen und zum anderen zu große Temperaturdifferenzen innerhalb des Akkupacks zu verhindern, als dies durch die Summe der dem Akkupack innewohnenden natürliche Fähigkeit zur Konvektion und der dem Akkupack innewohnenden natürlichen Fähigkeit zur Wärmeleitung möglich ist.

Dabei soll bevorzugt auf eine Zwangskonvektion verzichtet werden können, insbesondere auf eine Zwangskonvektion durch Ventilator.

Darüber hinaus soll auf eine Temperierflüssigkeit verzichtet werden. Damit soll vermieden werden, dass die Temperaturflüssigkeit auslaufen und Schäden verursachen kann, wenn ein Elektromobil, das ein mit einer solchen Temperierflüssigkeit ausgerüstetes Akkupack aufweist, verunfallt. Auch soll ein solches Akkupack leicht gegen ein anderes ausgetauscht werden können, beispielsweise ein Akkupack mit entladenen Akkus gegen ein Akkupack mit geladenen Akkus, ohne dass schweres Heben nötig ist oder es durch Undichtigkeiten zum Auslaufen von Temperierflüssigkeit geben kann.

Insbesondere sollen gewährleistet sein, dass sich die Akkus eines Akkupack durch Laden oder Entladen der Akkus nicht auf eine Temperatur von 60 °C oder mehr erwärmen.

So sollen Schäden an den Akkus verhindert werden, die von der Verringerung der Leistung über die Verringerung der Lebensdauer bis zum Ausfall eines oder mehrerer der Akkus führen können.

Dadurch sollen hocheffiziente Akkupacks zur Verfügung gestellt werden können, die Elektromobilen eine Reichweite und eine Aufladegeschwindigkeit ermöglichen, die der Reichweite und der Betankungsgeschwindigkeit von entsprechenden Automobilen, die ausschließlich durch einen Verbrennungsmotor angetrieben werden, zumindest weitgehend entsprechen.

Gelöst wird diese Aufgabe durch eine Vorrichtung mit den Merkmalen des Hauptanspruchs. Vorzugsweise Ausgestaltungen finden sich in den Unteransprüchen.

Insbesondere gelöst wird die Aufgabe durch einen Wärmeableiteinleger, nachfolgend auch kurz Einleger genannt.

Dieser Einleger umfasst eine Heatpipe und ein Wärmeeinkoppelelement. Die Heatpipe eines Einlegers wird nachfolgend auch Einlegerheatpipe genannt.

Der Einleger soll geeignet sein, im Nachbarschaftszwischenraum zwischen zwei oder mehr Akkus eines Akkupacks angeordnet zu sein.

Der Nachbarschaftszwischenraum dieser zwei oder mehr Akkus wird bei einer Anordnung der Akkus in Reihe von zwei Akkus gebildet, bei einer Anordnung der Akkus analog der kubisch primitiven Kugelpackung wird dieser Nachbarschaftszwischenraum von vier Akkus gebildet und bei einer Anordnung der Akkus analog der hexagonal dichtesten Kugelpackung wird dieser Nachbarschaftszwischenraum von drei Akkus gebildet.

Ein Wärmeeinkoppelelement ist ein materieller Gegenstand, insbesondere ein Formkörper, der in der Lage ist, Wärme von einer Wärmequelle auf eine Heatpipe zu übertragen, insbesondere in eine Heatpipe einzuleiten.

Heatpipes sind dem Fachmann grundsätzlich bekannt. Bei einer Heatpipe - auch Wärmerohr genannt - handelt es sich um einen Wärmeübertrager, der unter Nutzung von Verdampfungswärme eines Arbeitsmediums eine hohe Wärmestromdichte erlaubt, d. h. auf kleiner Querschnittsfläche können große Wärmemengen transportiert werden. Zwar können Heatpipes nur in einem begrenzten Temperaturbereich, beispielsweise im Bereich von 0 bis 250 °C für Heatpipes aus Kupfer mit Wasser als Arbeitsmedium, eingesetzt werden, in diesem besitzen sie aber einen Wärmewiderstand, der deutlich kleiner ist als der von Metallen. Das Verhalten der Wärmerohre kommt daher der isothermen Zustandsänderung sehr nah. Es herrscht eine beinah konstante Temperatur über die Länge des Wärmerohrs. Bei gleicher Übertragungsleistung sind deswegen wesentlich leichtere Bauweisen als bei herkömmlichen Wärmeübertragern unter gleichen Einsatzbedingungen möglich. Heatpipes enthalten ein hermetisch gekapseltes Volumen in Form eines Rohres mit je einem der Wärmequelle zugewandten Ende und einem dem Kühlkörper zugewandten Ende. Das Rohr ist mit einem Arbeitsmedium, beispielsweise Wasser oder Ammoniak, gefüllt, welches das Volumen zu einem kleinen Teil in flüssigem, zum größeren Teil in dampfförmigem Zustand ausfüllt. Bei Wärmeeintrag beginnt das Arbeitsmedium zu verdampfen und zwar am der Wärmequelle zugewandten Ende. Dadurch wird über dem Flüssigkeitsspiegel der Druck im Dampfraum lokal erhöht, was zu einem geringen Druckgefälle innerhalb des Wärmerohrs führt. Der entstandene Dampf strömt deswegen zu einer Stelle mit niedrigerer Temperatur, also dem der Wärmesenke zugewandten Ende, wo er kondensiert. An dieser Stelle erhöht sich die Temperatur durch die frei werdende Kondensationswärme. Die zuvor aufgenommene latente Wärme wird an die Umgebung abgegeben. Das nun flüssige Arbeitsmedium kehrt durch Kapillarkräfte wieder zurück zu der Stelle, an der die Wärme eingeleitet wird. (Quelle: Wikipedia).

Der Klarheit halber sei angemerkt, dass im Sinne der vorliegenden Erfindung das Arbeitsmedium einer Heatpipe keine zwischen den Akkus eines Akkuspacks frei fließende Temperierflüssigkeit darstellt, wie sie in dieser Schrift bei der Erörterung der in der WO2010060856A1 offenbarten technischen Lösung erwähnt wird.

Der erfindungsgemäße Einleger ermöglicht es zum einen, dass sich die Akkus eines Akkupack durch Laden oder Entladen der Akkus nicht auf eine Temperatur von 60 °C oder mehr erwärmen, und zum anderen, dass keine Temperaturdifferenzen von 4 K oder mehr innerhalb eines Akkupacks auftreten.

Somit können Schäden an den Akkus verhindert werden, die von der Verringerung der Leistung über die Verringerung der Lebensdauer bis zum Ausfall eines oder mehrerer der Akkus führen können.

Darüber hinaus kann auf eine Temperierflüssigkeit verzichtet werden. Das vermeidet, dass eine Temperaturflüssigkeit auslaufen und Schäden verursachen kann, wenn ein Elektromobil, das ein mit einer solchen Temperierflüssigkeit ausgerüstetes Akkupack aufweist, verunfallt. Auch kann ein solches Akkupack leicht gegen ein anderes ausgetauscht werden, beispielsweise ein Akkupack mit entladenen Akkus gegen ein Akkupack mit geladenen Akkus, da ein solches Akkupack handlicher und in der Regel leichter, zumindest nicht schwerer, ist als eines mit Temperierflüssigkeit und es kein Auslaufen von Temperierflüssigkeit durch Undichtigkeiten geben kann.

Dies löst überdies die Aufgabe, hocheffiziente Akkupacks zur Verfügung zu stellen, die Elektromobilen eine Reichweite und eine Aufladegeschwindigkeit ermöglichen, die der Reichweite und der Betankungsgeschwindigkeit von entsprechenden Automobilen, die ausschließlich durch einen Verbrennungsmotor angetrieben werden, zumindest weitgehend entsprechen.

Bevorzugt besteht das Wärmeeinkoppelelement des erfindungsgemäßen Einlegers im Wesentlichen aus einem wärmeleitfähigen Material mit einer Wärmeleitfähigkeit in plane von mindestens 0,1 W/(m*K), bevorzugt von mindestens von 0,2 W/(m*K), besonders bevorzugt von mindestens von 0,5 W/(m*K).

Besonders bevorzugt besteht das Wärmeeinkoppelelement des erfindungsgemäßen Einlegers im Wesentlichen aus einer wärmeleitfähigen, elektrisch isolierenden thermoplastische Zusammensetzung mit einer Wärmeleitfähigkeit in plane von 0,1 bis 30 W/(m*K), bevorzugt von 0,2 bis 10 W/(m*K), besonders bevorzugt von 0,5 bis 4 W/(m*K). Dabei hat diese wärmeleitfähige, elektrisch isolierende thermoplastische Zusammensetzung einen spezifischen Durchgangswiderstand von über 10¹⁰ Ohm*m, bevorzugt von über 10¹² Ohm*m, besonders bevorzugt von über 10¹³ Ohm*m.

Unter elektrischer Isolation wird im nachfolgenden ein spezifischer Durchgangswiderstand von über 10¹⁰ Ohm*m, bevorzugt von über 10¹² Ohm*m, besonders bevorzugt von über 10¹³ Ohm*m, definiert.

Dabei wird der spezifische Durchgangswiderstand nach DIN IEC 60093 (DIN IEC 60093:1993-12) ermittelt.

Wenn im Rahmen der vorliegenden Erfindung von Wärmeleitfähigkeit in Spritzgussrichtung (inplane) die Rede ist, wurde diese Wärmeleitfähigkeit bei 23°C bestimmt gemäß ASTM E 1461 (ASTM E 1461:2013) an Proben mit der Dimension von 80 mm x 80 mm x 2 mm.

Soweit in der vorliegenden Schrift der Begriff "im Wesentlichen" in dem Zusammenhang genannt wird, dass ein erster materieller Gegenstand im Wesentlichen aus einem zweiten materieller Gegenstand besteht, ist damit gemeint, dass dieser erste materieller Gegenstand zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus dem zweiten materieller Gegengstandbesteht. Bezogen auf das Wärmeeinkoppelelement des erfindungsgemäßen Einlegers bedeutet dies, dass das Wärmeeinkoppelelement zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus einer wärmeleitfähigen, elektrisch isolierenden thermoplastische Zusammensetzung mit einer Wärmeleitfähigkeit in plane von 0,1 bis 30 W/(m*K), bevorzugt von 0,2 bis 10 W/(m*K), besonders bevorzugt von 0,5 bis 4 W/(m*K), mit einem spezifischen Durchgangswiderstand von über 10¹⁰ Ohm*m, bevorzugt von über 10¹² Ohm*m, besonders bevorzugt von über 10¹³ Ohm*m besteht.

In einer bevorzugten Alternative 1 besteht das Wärmeeinkoppelelement des erfindungsgemäßen Einlegers im Wesentlichen aus einer wärmeleitfähigen thermoplastischen Zusammensetzung mit einer Wärmeleitfähigkeit in plane von 0,5 bis 50 W/(m*K), bevorzugt von 1 bis 30 W/(m*K), besonders bevorzugt von 2 bis 20 W/(m*K). Dabei kann diese wärmeleitfähige thermoplastische Zusammensetzung einen spezifischen Durchgangswiderstand von 10¹⁰ Ohm*m oder weniger aufweisen.

In einer bevorzugten Alternative 2 besteht das Wärmeeinkoppelelement des erfindungsgemäßen Einlegers im Wesentlichen aus einem Metall, insbesondere Aluminium, Kupfer oder Eisen, oder einer Metalllegierung, insbesondere einer Aluminiumlegierung, einer Kupferlegierung oder einer Eisenlegierung, bestehen.

Wird die Alternative 1 gewählt und hat die wärmeleitfähige thermoplastische Zusammensetzung einen spezifischen Durchgangswiderstand von 10¹⁰ Ohm*m oder weniger oder wird die Alternative 2 gewählt, ist es erforderlich, dass der Akku oder die Akkus des Akkupacks, der bzw. die im Bereich mindestens einer seiner bzw. ihrer Elektroden mit dem Wärmekoppelelement in Berührung kommt bzw. kommen, gegenüber dem Wärmekoppelelement eine elektrische Isolation aufweist bzw. aufweisen. Diese elektrische Isolation kann beispielsweise durch eine Umhüllung oder eine Beschichtung mit einem Material mit einem spezifischen Durchgangswiderstand von über 10¹⁰ Ohm*m, bevorzugt von über 10¹² Ohm*m, besonders bevorzugt von über 10¹³ Ohm*m erfolgen.

Auf diese Weise kann dann verhindert werden, dass weder ein elektrischer Kurzschluss erfolgt noch ein Akku unnötig entladen wird.

Bevorzugt ist die Einlegerheatpipe mit der wärmeleitfähigen thermoplastische Zusammensetzung des Wärmeeinkoppelelements mindestens teilweise umgeben, besonders bevorzugt umspritzt. Durch das Umspritzen wird erreicht, dass die Einlegerheatpipe mit der wärmeleitfähigen thermoplastische Zusammensetzung des Wärmeeinkoppelelements derart verbunden ist, dass eine wirksame Wärmeübertragung möglich ist, da durch das Umspritzen zumindest in Teilen der Berührungsflächen zwischen der Einlegerheatpipe und der wärmeleitfähigen thermoplastische Zusammensetzung des Wärmeeinkoppelelements eine stoffschlüssige Verbindung entsteht. Das wiederum bewirkt, dass zwischen der Einlegerheatpipe und der wärmeleitfähigen thermoplastische Zusammensetzung des Wärmeeinkoppelelements kein Zwischenraum mehr vorhanden ist, der eine wirksame Wärmeübertragung behindert.

Bevorzugt beträgt der Quotient von Außendurchmesser zu Wandstärke der Einlegerheatpipe von 10:1 bis 4:1, bevorzugt 8:1 bis 4:1, besonders bevorzugt 7:1 bis 5:1 beträgt. Damit wird sichergestellt, dass die Einlegerheatpipe beim Umspritzen weder kollabiert, noch aufplatzt, noch auf andere Weise soweit beschädigt zu wird, das eine wirkungsvolle Wärmeableitung behindert wird. Damit wird sichergestellt, dass die Fähigkeit der Einlegerheatpipe zur Wärmeableitung nach dem Umspritzen mindestens 80 %, bevorzugt mindestens 90 %, besonders bevorzugt mindestens 95 %, insbesondere mindestens 98 % der Fähigkeit zur Wärmeableitung der nicht umspritzten Heatpipe, also der Heatpipe vor dem Umspritzen, beträgt.

Bevorzugt ist die Einlegerheatpipe länger als die Länge der längste der zwei oder mehr Akkus, besonders bevorzugt ist die Einlegerheatpipe um mindestens 10 % länger als der längste der zwei oder mehr Akkus, besonders bevorzugt ist die Einlegerheatpipe um mindestens 20 % länger als der längste der zwei oder mehr Akkus.

Bevorzugt ist der Einleger so geformt, dass er geeignet ist, den Nachbarschaftszwischenraum zwischen zwei der mehr unmittelbar benachbarten Akkus eines Akkupacks möglichst vollständig, das heißt zu mindestens 65 %, bevorzugt zu mindestens 80 %, besonders bevorzugt zu mindestens 90 %, ganz besonders bevorzugt zu mindestens 95 %, auszufüllen.

Bevorzugt entspricht dabei die Länge des Wärmeeinkoppelelements mindestens 65 %, bevorzugt mindestens 80%, besonders bevorzugt mindestens 90 %, ganz besonders bevorzugt mindestens 100 %, insbesondere mehr als 100 % der Länge des kürzesten der mindestens zwei Akkus.

Bevorzugt ist die Einlegerheatpipe zu mindestens 80 %, bevorzugt mindestens zu mindestens 90 %, besonders bevorzugt zu 95 bis 99 % in die Länge des Wärmeeinkoppelelements eingebracht, jeweils bezogen auf die Länge des Wärmeeinkoppelelements.

Entsprechend der Anordnung der Akkus im Akkupack ist bei einer Anordnung der Akkus in Reihe der Querschnitt des Einlegers eine Fläche begrenzt durch zwei gleichlange, genau gegenüberliegende, zueinander parallele Strecken und zwei gleichgroße Kreisbögen, wobei die jeweils unmittelbar benachbarten Streckenenden der jeweils gegenüberliegenden Strecken durch je einen der Kreisbögen miteinander verbunden sind, wobei beide Kreisbögen konkav angeordnet sind.

Entsprechend der Anordnung der Akkus im Akkupack analog der kubisch primitiven Kugelpackung ist der Querschnitt des Einlegers eine Fläche begrenzt durch vier gleichlange, jeweils um 90° gegeneinander versetzte Strecken und vier gleichgroße Kreisbögen, wobei die jeweils unmittelbar benachbarten Streckenenden der jeweils um 90° gegeneinander versetzte Strecken durch je einen der Kreisbögen miteinander verbunden sind, wobei alle Kreisbögen konkav sind.

Entsprechend der Anordnung der Akkus im Akkupack analog der hexagonal dichtesten Kugelpackung ist der Querschnitt des Einlegers eine Fläche begrenzt durch drei gleichlange, jeweils um 120° gegeneinander versetzte Strecken und drei gleichgroße Kreisbögen, wobei die jeweils unmittelbar benachbarten Streckenenden der jeweils um 120° gegeneinander versetzte Strecken durch je einen der Kreisbögen miteinander verbunden sind, wobei alle Kreisbögen konkav sind.

Bei anderen Anordnungen der Akkus im Akkupack ist der Querschnitt des Einleger analog den oben genannten Beispiele für den Querschnitt gestaltet.

Bevorzugt weist der Einleger auch ein Wärmeauskoppelelement auf. Ein Wärmeauskoppelelement ist ein materieller Gegenstand, insbesondere ein Formkörper, der in der Lage ist, Wärme von einer Heatpipe abzuleiten. Ein Wärmeauskoppelelement stellt also eine Wärmesenke dar.

Bevorzugt weist die Einlegerheatpipe an ihrem der Wärmequelle abgewandten Ende, also dem Ende, das den zwei oder mehr Akkus abgewandt ist, als Wärmeauskoppelelement einen Kühlkörper auf. Mit diesem Kühlkörper ist die Einlegerheatpipe so verbunden, beispielweise durch passgenaues Einstecken des der Wärmequelle abgewandten Endes der Einlegerheatpipe in eine Bohrung des Kühlkörpers oder - wenn der Kühlkörper im Wesentlichen aus einer thermoplastischen Zusammensetzung besteht, durch Umspritzen des der Wärmequelle abgewandten Endes der Einlegerheatpipe mit der thermoplastischen Zusammensetzung des Kühlkörpers, dass die Wärme von der Einlegerheatpipe auf den Kühlkörper wirksam übertragen werden kann. Von dem Kühlkörper wird die Wärme dann durch Konvektion und Wärmeleitung an die Umgebung abgegeben, insbesondere durch Konvektion. Der Kühlkörper kann beispielsweise als Kühlplatte oder Rippenkörper oder in anderer geeigneter Weise ausgebildet sein. Nachfolgend wird dieser Kühlkörper auch Akkupackkühlkörper genannt. Der Akkupackkühlkörper befindet sich in der Regel außerhalb des Zellhalters und innerhalb des den Akkupack umgebenden Gehäuses. Der Akkupackkühlkörper kann sich jedoch auch außerhalb des Gehäuses befinden.

Bevorzugt besteht dieser Akkupackkühlkörper im Wesentlichen aus einer wärmeleitfähigen thermoplastischen Zusammensetzung mit einer Wärmeleitfähigkeit in plane von 0,5 bis 50 W/(m*K), bevorzugt von 1 bis 30 W/(m*K) bevorzugt von 2 bis 20 W/(m*K). Dabei kann diese wärmeleitfähige thermoplastische Zusammensetzung einen spezifischen Durchgangswiderstand von 10¹⁰ Ohm*m oder weniger aufweisen.

Alternativ bevorzugt besteht dieser Akkupackkühlkörper im Wesentlichen aus einem Metall, insbesondere Aluminium, Kupfer oder Eisen, oder einer Metalllegierung, insbesondere einer Aluminiumlegierung, einer Kupferlegierung oder einer Eisenlegierung.

Weiter alternativ bevorzugt endet das der Wärmequelle abgewandten Ende einer Einlegerheatpipe frei, insbesondere außerhalb des Zellhalters, weiter insbesondere außerhalb des den Akkupack umgebenden Gehäuses, ist also beispielsweise nur von Luft umgeben. Aufgrund der räumlich weniger beengten Verhältnisse und der dadurch besseren Konvektion kann der Einleger auch auf diese Weise Wärme wirksam abführen.

Die oben beschriebenen Ausführungsformen des erfindungsgemäße Einlegers ermöglichen es also, dass sich die Akkus eines Akkupack durch Laden oder Entladen der Akkus nicht auf eine Temperatur von 60 °C oder mehr erwärmen.

Somit können Schäden an den Akkus verhindert werden, die von der Verringerung der Leistung über die Verringerung der Lebensdauer bis zum Ausfall eines oder mehrerer der Akkus führen können.

Darüber hinaus kann auf eine Temperierflüssigkeit verzichtet werden. Das vermeidet, dass eine Temperaturflüssigkeit auslaufen und Schäden verursachen kann, wenn ein Elektromobil, das ein mit einer solchen Temperierflüssigkeit ausgerüstetes Akkupack aufweist, verunfallt. Auch kann ein solches Akkupack leicht gegen ein anderes ausgetauscht werden, beispielsweise ein Akkupack mit entladenen Akkus gegen ein Akkupack mit geladenen Akkus, da ein solches Akkupack handlicher und in der Regel leichter, zumindest nicht schwerer, ist als eines mit Temperierflüssigkeit und es kein Auslaufen von Temperierflüssigkeit durch Undichtigkeiten geben kann.

Dies löst überdies die Aufgabe, hocheffiziente Akkupacks zur Verfügung zu stellen, die Elektromobilen eine Reichweite und eine Aufladegeschwindigkeit ermöglichen, die der Reichweite und der Betankungsgeschwindigkeit von entsprechenden Automobilen, die ausschließlich durch einen Verbrennungsmotor angetrieben werden, zumindest weitgehend entsprechen.

Insbesondere ermöglicht der erfindungsgemäße Einleger, dass sich die Akkus eines Akkupack durch Laden oder Entladen der Akkus nicht auf eine Temperatur von 60 °C oder mehr erwärmen, wenn in 50 % oder mehr, bevorzugt 70 % oder mehr, besonders bevorzugt 90 % oder mehr, ganz besonders bevorzugt 95 % oder mehr der Nachbarschaftszwischenräume zwischen den Akkus eines Akkupacks ein erfindungsgemäßer Einleger eingebracht ist.

Gegenstand der vorliegenden Erfindung ist daher auch ein Akkupack, bei dem in 50 % oder mehr, bevorzugt 70 % oder mehr, besonders bevorzugt 90 % oder mehr, ganz besonders bevorzugt 95 % oder mehr, insbesondere 100 % der Nachbarschaftszwischenräume zwischen den Akkus eines Akkupacks ein erfindungsgemäßer Einleger eingebracht ist.

In einer bevorzugten Ausführungsform dieser Erfindung ist - sofern ein Akkupackkühlkörper vorhanden ist - dieser mit mindestens zwei Einlegerheatpipes verbunden. Somit stellt dieser Akkupackkühlkörper für diese mindestens zwei Einlegerheatpipes eine gemeinsame Wärmesenke dar. Bevorzugt sind 50 % oder mehr, bevorzugt 70 % oder mehr, besonders bevorzugt 90 % oder mehr, ganz besonders bevorzugt 95 % oder mehr der Einlegerheatpipes eines Akkupacks mit demselben Akkupackkühlkörper als Wärmesenke verbunden.

Alternativ bevorzugt können die Einlegerheatpipes eines Akkupacks mit mehreren verschiedenen Akkupackkühlkörpern verbunden sein, wobei eine Einlegerheatpipe immer nur mit einem Akkupackkühlkörper verbunden ist, aber ein Akkupackkühlkörper mit mindestens einer Einlegerheatpipe, bevorzugt mit zwei oder mehr Einlegerheatpipes.

In einer besonderen Ausführungsform der Erfindung - unabhängig davon, ob ein Akkupackkühlköper mit einer Einlegerheatpipe oder mehreren Einlegerhheatpipes verbunden ist - ist ein Akkupackkühlkörper mit mindestens einer weiteren Heatpipe verbunden, wobei dieser Akkupackkühlkörper für diese mindestens eine weitere Heatpipe eine Wärmequelle darstellt. Diese mindestens eine weitere Heatpipe wird nachfolgend auch Akkupackkühlkörperheatpipe genannt. Akkupackkühlkörper und Akkupackkühlkörperheatpipe sind derart miteinander verbunden, beispielweise durch passgenaues Einstecken des dem Akkupackkühlkörper zugewandten Endes der Akkupackkühlkörperheatpipe in eine Bohrung des Kühlkörpers oder - wenn der Kühlkörper im Wesentlichen aus einer thermoplastischen Zusammensetzung besteht, durch Umspritzen des dem Akkupackkühlkörper zugewandten Endes der Akkupackkühlkörperheatpipe mit der thermoplastischen Zusammensetzung des Kühlkörpers, dass die Wärme vom Akkupackkühlkörper wirksam auf die Akkupackkühlkörperheatpipe übertragen werden kann und somit die Wärme wirksam in die Akkupackkühlkörperheatpipe eingeleitet werden kann.

Bevorzugt ist das dem Akkupackkühlkörper abgewandte Ende der mindestens einen Akkupackkühlkörperheatpipe mit einem elektrothermischen Wandler, bevorzugt mit einem Peltierelement oder mit einem Thermoelement, besonders bevorzugt mit einem Peltierelement, verbunden. Dieser elektrothermische Wandler dient dieser mindestens einen Akkupackkühlkörperheatpipe als Wärmesenke und wandelt die von der mindestens einen Akkupackkühlkörperheatpipe auf den elektrothermischen Wandler übertragene Wärme in elektrischen Strom um. Dieser Strom kann dann für verschiedenste Anwendungen gebraucht werden, beispielsweise für die Erwärmung oder das Kühlen von Luftströmen, mit denen der Fahrgastraum temperiert wird.

Bevorzugt ist je eine Akkupackkühlkörperheatpipe mit je einem elektrothermischen Wandler verbunden.

Peltierelemente oder Thermoelemente sind dem Fachmann grundsätzlich bekannt.

Ein Peltierelement ist ein elektrothermischer Wandler, der basierend auf dem Peltier-Effekt bei Stromdurchfluss eine Temperaturdifferenz oder bei Temperaturdifferenz einen Stromfluss (Seebeck-Effekt) erzeugt. Peltierelemente können sowohl zur Kühlung als auch - bei Stromrichtungsumkehr - zum Heizen verwendet werden. (Quelle: Wikipedia).

Ein Peltierelement weist ein sogenanntes "warmes Ende" und ein sogenanntes "kaltes Ende" auf. Das warme Ende ist der Ort eines Peltierelements, an dem Wärme in das Peltierelement eingeleitet wird; das kalte Ende ist der Ort eines Peltierelements, an dem Strom von dem Peltierelement abgenommen werden kann.

Ein Thermoelement ist ein Paar metallischer Leiter aus unterschiedlichem Material, die an einem Ende verbunden sind. Gemäß dem Seebeck-Effekt entsteht in einem Stromkreis aus zwei verschiedenen elektrischen Leitern bei einer Temperaturdifferenz zwischen den Kontaktstellen eine elektrische Spannung. Durch eine äußere Beschaltung kann gemäß dem Ohmschen Gesetz ein Stromfluss erhalten werden. Mehrere in Reihe geschaltete Thermoelemente bilden eine Thermokette, welche eine um deren Anzahl höhere elektrische Spannung liefert. (Quelle: Wikipedia).

In dem bevorzugten Fall, dass es sich bei dem elektrothermischen Wandler um ein Peltierelement handelt, ist die mindestens eine Akkupackkühlkörperheatpipe mit dem warmen Ende des Peltierelements verbunden, beispielsweise kraftschlüssig über eine Schraub- oder Klammerverbindung, wobei bevorzugt zwischen dem dem Akkupackkühlkörper abgewandten Ende der mindestens einen Akkupackkühlkörperheatpipe und dem Peltierelement eine wärmeleitfähige Paste eingebracht ist. So kann sichergestellt werden, dass eine wirksame Wärmeübertragung von der Akkupackkühlkörperheatpipe auf das Peltierelement erfolgt.

Da die Fläche der mindestens einen Akkupackkühlkörperheatpipe, die Wärme auf das warme Ende des Peltierelements überträgt, kleiner ist als die Fläche des warmen Endes des Peltierelements, ist bevorzugt das warme Ende des Peltierelements mit einer Wärmeleitschicht aus Kupfer, Silber oder Gold oder einer Kupfer-, Silber- oder Goldlegierung versehen, um eine bessere Wärmeübertragung von der mindestens einen Akkupackkühlkörperheatpipe auf das warme Ende des Peltierelements zu gewährleisten. Diese Wärmeleitschicht kann beispielsweise in Form einer Folie oder durch Bedampfung aufgebracht werden.

Um zu verhindern, dass die mindestens eine Akkupackkühlkörperheatpipe mehr Wärme auf das warme Ende des Peltierelements überträgt, als von diesem warmen Ende des Peltierelements abfließen kann, es also zu einem Überschuss an Wärme am warmen Ende des Peltierelements kommt, befindet sich an dem dem Peltierelement zugewandten Ende der mindestens einen Akkupackkühlkörperheatpipe ein weiterer Kühlkörper. Dieser Kühlkörper wird nachfolgend auch Warmendekühlkörper genannt. Der Warmendkühlkörper kann somit verhindern, dass es zu Überhitzungen, insbesondere lokalen Überhitzungen, am warmen Ende des Peltierelements kommt, durch die Bauteile des Peltierelements geschädigt werden können. Der Warmendekühlkörper gibt die überschüssige Wärme in der Regel an die Umgebung ab.

Das warme Ende des Peltierelements und der Warmendekühlkörper sind derart miteinander verbunden, dass die die Wärme vom warmen Ende des Peltierelements auf den Warmendekühlkörper wirksam übertragen werden kann. Diese Verbindung kann beispielsweise in analoger Weise wie die weiter oben beschriebene zwischen Akkupackkühlkörperheatpipe dem warme Ende des Peltierelements ausgestaltet sein.

Bevorzugt besteht der Warmendekühlkörper im Wesentlichen aus einer wärmeleitfähigen thermoplastischen Zusammensetzung mit einer Wärmeleitfähigkeit in plane von 0,5 bis 50 W/(m*K), bevorzugt von 1 bis 30 W/(m*K) bevorzugt von 2 bis 20 W/(m*K). Dabei kann diese wärmeleitfähige thermoplastische Zusammensetzung einen spezifischen Durchgangswiderstand von 10¹⁰ Ohm*m oder weniger aufweisen.

Alternativ bevorzugt besteht dieser Warmendekühlkörper im Wesentlichen aus einem Metall, insbesondere Aluminium, Kupfer oder Eisen, oder einer Metalllegierung, insbesondere einer Aluminiumlegierung, einer Kupferlegierung oder einer Eisenlegierung.

Der Warmendekühlkörper und die mindestens eine Akkupackkühlkörperheatpipe sind derart miteinander verbunden, dass die die Wärme von der mindestens einen Akkupackkühlkörperheatpipe auf den Warmendekühlkörper wirksam übertragen werden kann, beispielweise durch passgenaues Einstecken des dem Warmendekühlkörper zugewandten Endes der Akkupackkühlkörperheatpipe in eine Bohrung des Warmendekühlkörpers oder - wenn der Warmendekühlkörper im Wesentlichen aus einer thermoplastischen Zusammensetzung besteht, durch Umspritzen des dem Warmendekühlkörper zugewandten Endes der Akkupackkühlkörperheatpipe mit der thermoplastischen Zusammensetzung des Warmendekühlkörpers.

Damit ein Peltierelement Wärme in einen elektrischen Strom wandeln kann, ist - wie bereits weiter oben erläutert - eine Temperaturdifferenz zwischen dem warmen Ende des Peltierelements und dem kalten Ende des Peltierelements nötig. Um diese zu gewährleisten, befindet sich bevorzugt auch am kalte Ende des Peltierelements ein Kühlkörper. Dieser Kühlkörper wird nachfolgend auch Kaltendekühlkörper genannt.

Bevorzugt besteht der Kaltendekühlkörper im Wesentlichen aus einer wärmeleitfähigen thermoplastischen Zusammensetzung mit einer Wärmeleitfähigkeit in plane von 0,5 bis 50 W/(m*K), bevorzugt von 1 bis 30 W/(m*K) bevorzugt von 2 bis 20 W/(m*K). Dabei kann diese wärmeleitfähige thermoplastische Zusammensetzung einen spezifischen Durchgangswiderstand von 10¹⁰ Ohm*m oder weniger aufweisen.

Alternativ bevorzugt besteht dieser Kaltendekühlkörper im Wesentlichen aus einem Metall, insbesondere Aluminium, Kupfer oder Eisen, oder einer Metalllegierung, insbesondere einer Aluminiumlegierung, einer Kupferlegierung oder einer Eisenlegierung.

Das kalte Ende des Peltierelements und der Kaltendekühlkörper sind derart miteinander verbunden, dass die die Wärme vom kalten Ende des Peltierelements auf den Kaltendekühlkörper wirksam übertragen werden kann. Auch diese Verbindung kann beispielsweise in analoger Weise wie die weiter oben beschriebene zwischen Akkupackkühlkörperheatpipe dem warme Ende des Peltierelements ausgestaltet sein.

In einer alternativen Ausführungsform der Erfindung ist kein Akkupackkühlkörper und keine Akkupackkühlkörperheatpipe vorgesehen. Statt dessen ist jede einzelne der Einlegerheatpipes mit einem thermoelektrischen Wandler verbunden.

Für diesen elektrothermischen Wandler und für die Verbindung der Einlegerheatpipe mit dem elektrothermischen Wandler gelten die oben für einen elektrothermischen Wandler, eine Akkupackkühlkörperheatpipe und die Verbindung eines elektrothermischen Wandler mit einer Akkupackkühlkörperheatpipe beschriebenen bevorzugten Ausführungsformen entsprechend.

Die oben beschriebenen Ausführungsformen des Einlegers ermöglichen es in besonderer Weise, dass sich zum einen die Akkus eines Akkupack durch Laden oder Entladen der Akkus nicht auf eine Temperatur von 60 °C oder mehr erwärmen, und zum anderen, dass keine Temperaturdifferenzen von 4 K oder mehr innerhalb eines Akkupacks auftreten.

Somit können in besonderer Weise Schäden an den Akkus verhindert werden, die von der Verringerung der Leistung über die Verringerung der Lebensdauer bis zum Ausfall eines oder mehrerer der Akkus führen können.

Darüber hinaus kann auf eine Temperierflüssigkeit verzichtet werden. Das vermeidet, dass eine Temperaturflüssigkeit auslaufen und Schäden verursachen kann, wenn ein Elektromobil, das ein mit einer solchen Temperierflüssigkeit ausgerüstetes Akkupack aufweist, verunfallt. Auch kann ein solches Akkupack leicht gegen ein anderes ausgetauscht werden, beispielsweise ein Akkupack mit entladenen Akkus gegen ein Akkupack mit geladenen Akkus, da ein solches Akkupack handlicher und in der Regel leichter, zumindest nicht schwerer, ist als eines mit Temperierflüssigkeit und es kein Auslaufen von Temperierflüssigkeit durch Undichtigkeiten geben kann.

Dies löst überdies die Aufgabe, hocheffiziente Akkupacks zur Verfügung zu stellen, die Elektromobilen eine Reichweite und eine Aufladegeschwindigkeit ermöglichen, die der Reichweite und der Betankungsgeschwindigkeit von entsprechenden Automobilen, die ausschließlich durch einen Verbrennungsmotor angetrieben werden, zumindest weitgehend entsprechen.

Gegenstand der vorliegenden Erfindung ist somit auch ein Elektromobil, aufweisend mindestens einen erfindungsgemäßen Einleger oder ein erfindungsgemäßes Akkupack.

Geeignete thermoplastischen Kunststoffe für die erfindungsgemäß verwendeten thermoplastischen Zusammensetzungen, sind Polycarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA), Polyamide (bevorzugt Polyamid 6 (PA6) und Polyamid 6,6 (PA6,6)) sowie Copolymere mit Styrol wie z.B. transparentes Polystyrolacrylnitril (PSAN), thermoplastische Polyurethane, Polymere auf Basis von zyklischen Olefinen (z.B. TOPAS CD, ein Handelsprodukt der Firma Ticona) oder Mischungen aus den genannten Polymeren sowie Polycarbonat-Blends mit olefinischen Copolymeren oder Pfropfpolymeren, wie beispielsweise Styrol/Acrylnitril-Copolymeren und gegebenenfalls weiteren der oben genannten Polymeren. Dies gilt unabhängig davon, ob eine erfindungsgemäß verwendete thermoplastische Zusammensetzung einen spezifischen Durchgangswiderstand von 10¹⁰ Ohm*m oder weniger oder einen spezifischen Durchgangswiderstand von über 10¹⁰ Ohm*m, bevorzugt von über 10¹² Ohm*m, besonders bevorzugt von über 10¹³ Ohm*m, aufweist.

Ein geeigneter thermoplastischer Kunststoff für die erfindungsgemäß verwendeten thermoplastischen Zusammensetzungen ist insbesondere Polycarbonat.

Die wärmeleitfähige thermoplastische Zusammensetzung - soweit sie einen spezifischen Durchgangswiderstand von 10¹⁰ Ohm*m oder weniger aufweisen darf - kann erfindungsgemäß bevorzugt aus denen in der WO 2015/135958 A1 beschriebenen ausgewählt werden.

Andere, ebenfalls für die vorliegende Erfindung brauchbare wärmeleitfähige thermoplastische Zusammensetzungen sind beispielsweise offenbart in der WO2012/174574A2, der WO2017/005735A1, der WO2017/005738A1 und der WO2017005736A1, wobei die in der WO2017/005735A1 offenbarten erfindungsgemäß verwendeten wärmeleitfähigen thermoplastischen Zusammensetzungen besonders geeignet sind.

Die wärmeleitfähige thermoplastische Zusammensetzung - soweit sie einen spezifischen Durchgangswiderstand von über 10¹⁰ Ohm*m, bevorzugt von über 10¹² Ohm*m, besonders bevorzugt von über 10¹³ Ohm*m aufweisen soll - kann erfindungsgemäß bevorzugt aus denen in der WO 2017/005736 A1 oder denen in der WO 2017/005735 A1 beschriebenen ausgewählt werden.

Auch kann die wärmeleitfähige thermoplastische Zusammensetzung - soweit sie einen spezifischen Durchgangswiderstand von über 10¹⁰ Ohm*m, bevorzugt von über 10¹² Ohm*m, besonders bevorzugt von über 10¹³ Ohm*m aufweisen soll - alternativ erfindungsgemäß bevorzugt aus denen in der WO 2017/005738 A1 beschriebenen ausgewählt werden.

Gegenstand der vorliegenden Erfindung ist daher die Verwendung einer thermoplastischen Zusammensetzung mit einer Wärmeleitfähigkeit in plane von mindestens 0,1 W/(m*K), bevorzugt von mindestens von 0,2 W/(m*K), besonders bevorzugt von mindestens von 0,5 W/(m*K) zur Ableitung von Wärme aus einem Akkupack.

Erfindungsgemäß bevorzugt weist dabei die thermoplastische Zusammensetzung einen spezifischer Durchgangswiderstand von über 10¹⁰ Ohm*m, bevorzugt von über 10¹² Ohm*m, besonders bevorzugt von über 10¹³ Ohm*m, auf.

Bevorzugte Ausgestaltungen der Erfindung sind in den nachfolgenden Figuren dargestellt, ohne dass die Erfindung dadurch auf diese Ausgestaltungen beschränkt wird.

### Dabei sind

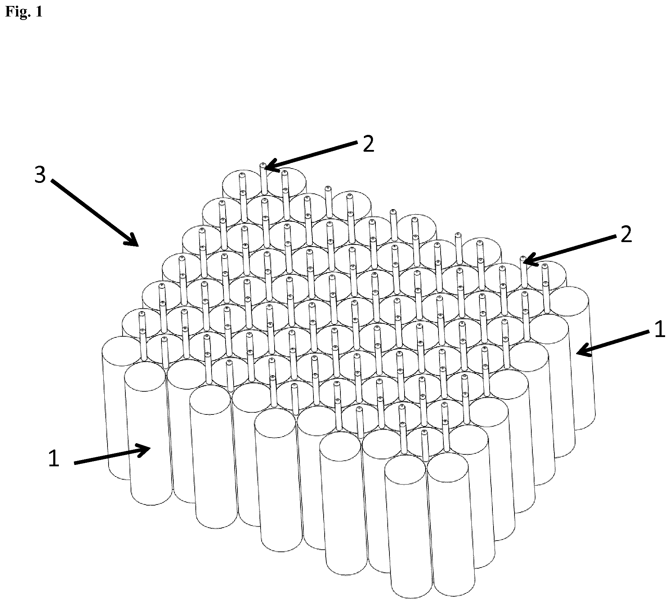

- 1: Akku
- 2: Einlegerheatpipe
- 3: Akkupack
- 4: Wärmeeinkoppelelement
- 5: Einleger
- 6: Nachbarschaftszwischenraum bei zwei Akkus in Reihe
- 7: Nachbarschaftszwischenraum zwischen drei Akkus bei einer Anordnung von der Akkus analog der hexagonal dichtesten Kugelpackung
- 8: Nachbarschaftszwischenraum bei einer Anordnung von vier Akkus analog der kubisch primitiven Kugelpackung
- 9: Akkupackkühlkörper
- 10: Akkupackkühlkörperheatpipe
- 11: Zellhalter
- 12: Gehäuse
- 13: Warmendekühlkörper
- 14: Wärmeleitschicht
- 15: Peltierelement
- 16: Kaltendekühlkörper
- Fig. 1: zeigt einen Akkupack (3) mit Akkus (1) angeordnet analog der hexagonal dichtesten Kugelpackung und Einlegerheatpipes (2).

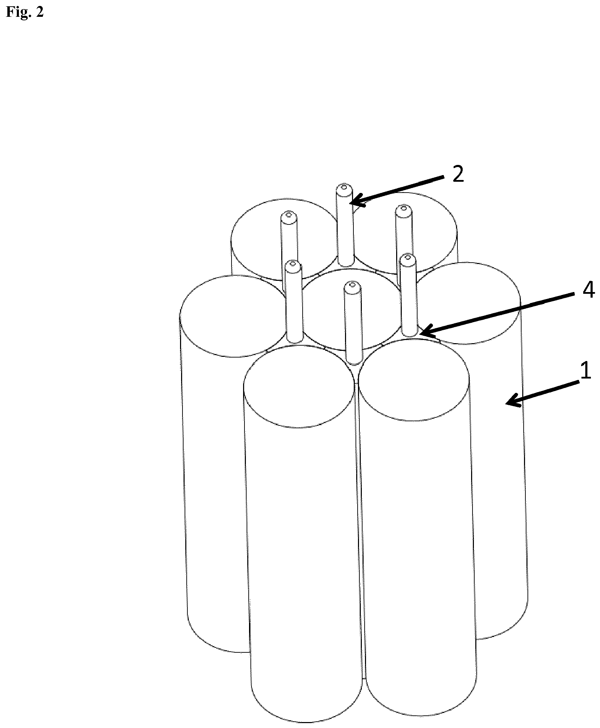

- Fig 2: zeigt einen Ausschnitt aus einem Akkupack mit Akkus (1) angeordnet analog der hexagonal dichtesten Kugelpackung mit Einlegerheatpipes (2) und Wärmeeinkoppelelementen (4).

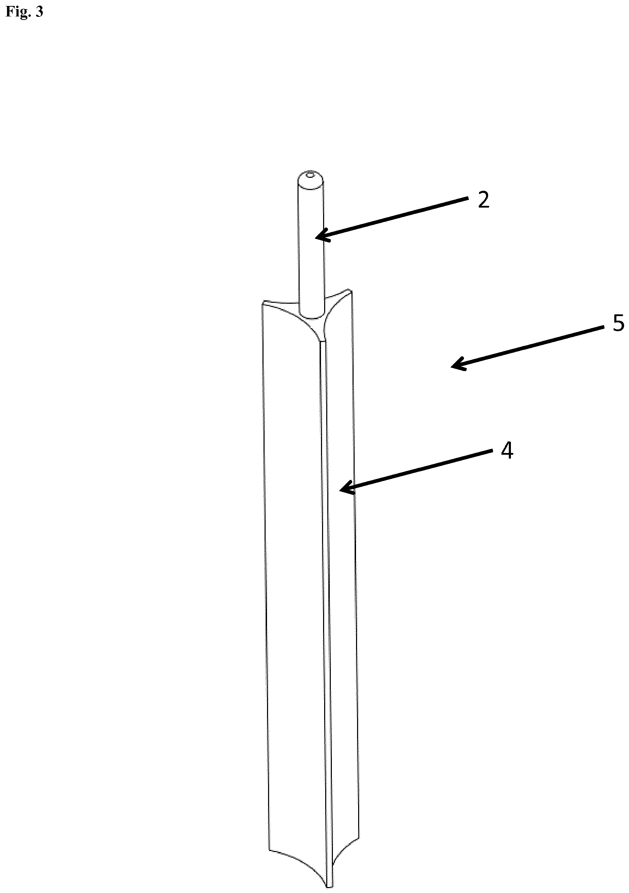

- Fig. 3: zeigt einen Einleger (5) mit Einlegerheatpipes (2) und Wärmeeinkoppelelementen (4).

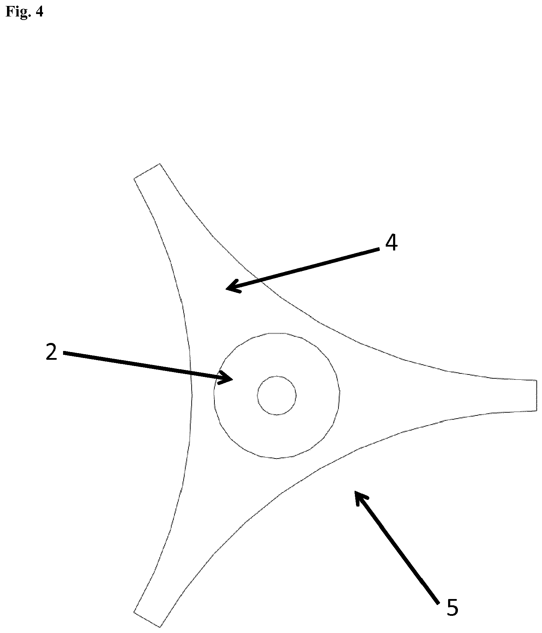

- Fig. 4: zeigt einen Querschnitt durch einen Einleger (5) mit Einlegerheatpipe (2) und Wärmeeinkoppelelement (4).

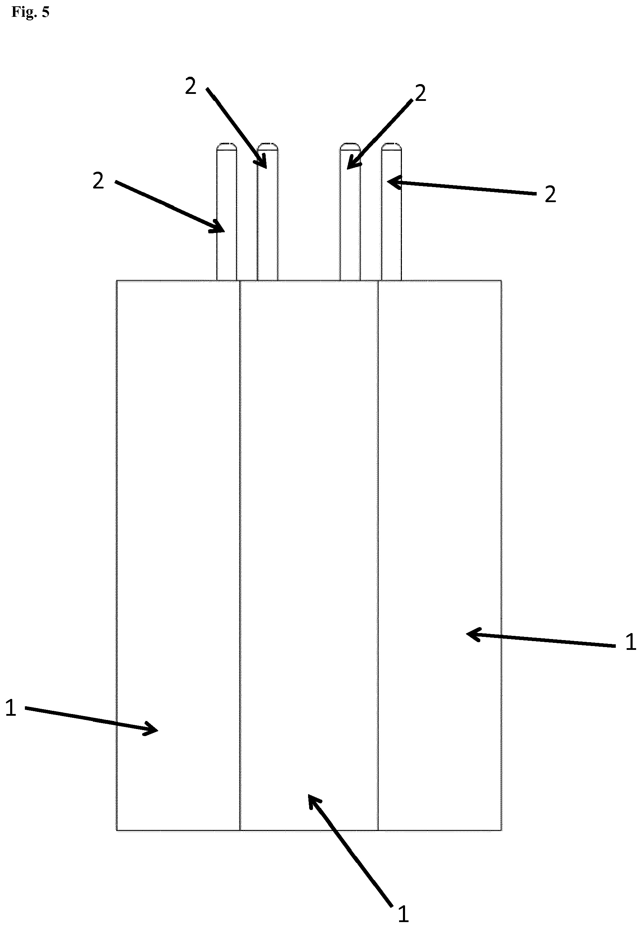

- Fig. 5: zeigt eine Seitenansicht von mehreren Akkus (1) mit Einlegerheatpipes (2).

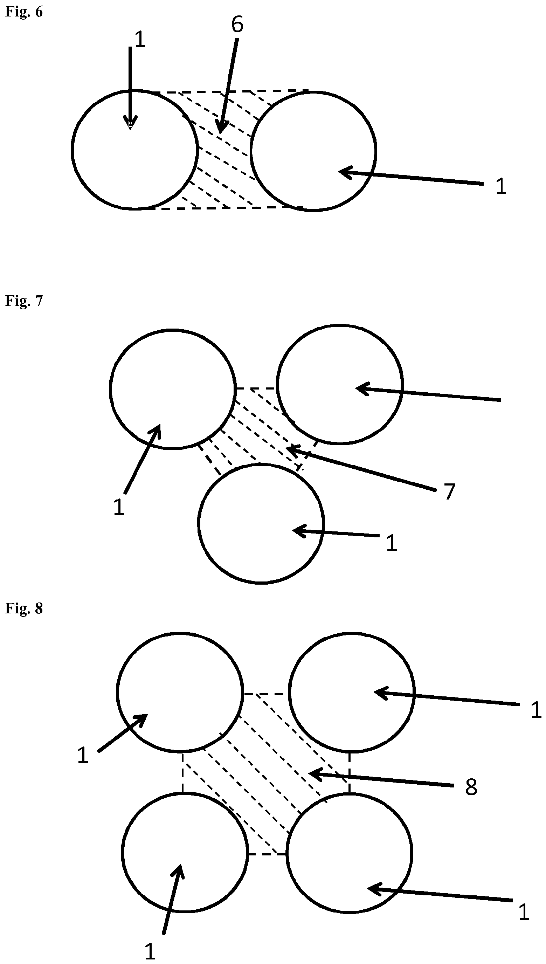

- Fig. 6: zeigt den Querschnitt durch eine Anordnung von zwei Akkus (1) in Reihe mit Nachbarschaftszwischenraum (6).
- Fig. 7: zeigt den Querschnitt durch eine Anordnung von der Akkus (1) analog der hexagonal dichtesten Kugelpackung mit Nachbarschaftszwischenraum (7).
- Fig. 8: zeigt den Querschnitt durch eine Anordnung von der Akkus (1) analog der kubisch primitiven Kugelpackung mit Nachbarschaftszwischenraum (8).

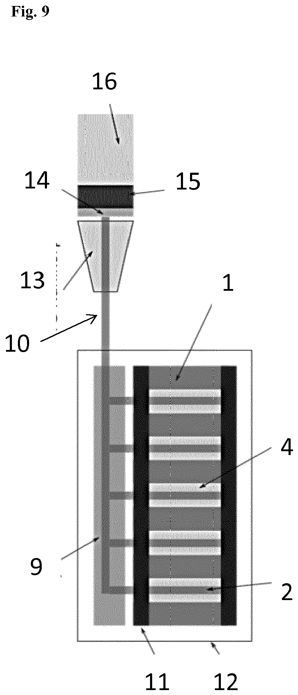

- Fig. 9: zeigt eine schematische Darstellung eines Akkupacks (3) mit Akkus (1), Einlegern (5) umfassend Einlegerheatpipes (2) und Wärmeeinkoppelelemente (4), Akkupackkühlkörper (9), Akkupackkühlkörperheatpipe (10), Zellhalter (11), Gehäuse (12), Warmendekühlkörper (13), Wärmeleitschicht (14), Peltierelement (15) und Kaltendekühlkörper (16).

## Patentansprüche

1. Wärmeableiteinleger, umfassend eine Einlegerheatpipe und ein Wärmeeinkoppelelement, wobei das Wärmeeinkoppelelement zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus einem wärmeleitfähigen Material mit einer Wärmeleitfähigkeit in plane von mindestens 0,1 W/(m*K), bevorzugt von mindestens von 0,2 W/(m*K), besonders bevorzugt von mindestens von 0,5 W/(m*K) besteht.

2. Wärmeableiteinleger nach Anspruch 1, wobei das Wärmeeinkoppelelement zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus einer wärmeleitfähigen thermoplastischen Zusammensetzung mit einer Wärmeleitfähigkeit in plane von 0,1 bis 30 W/(m*K), bevorzugt von 0,2 bis 10 W/(m*K), besonders bevorzugt von 0,5 bis 4 W/(m*K), und einem spezifischer Durchgangswiderstand von über 10¹⁰ Ohm*m, bevorzugt von über 10¹² Ohm*m, besonders bevorzugt von über 10¹³ Ohm*m, besteht.

3. Wärmeableiteinleger nach Anspruch 1, wobei das Wärmeeinkoppelelement zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus einer wärmeleitfähigen thermoplastischen Zusammensetzung mit einer Wärmeleitfähigkeit in plane von 0,5 bis 50 W/(m*K), bevorzugt von 1 bis 30 W/(m*K), besonders bevorzugt von 2 bis 20 W/(m*K), insbesondere von 7 bis 15 W/(m*K), besteht.

4. Wärmeableiteinleger nach Anspruch 1, wobei das Wärmeeinkoppelelement zu mindestens 50 Gew.-%, bevorzugt zu mindestens 65 Gew.-%, besonders bevorzugt zu mindestens 80 Gew.-%, ganz besonders bevorzugt zu mindestens 95 Gew.-% aus einem Metall, insbesondere Aluminium, Kupfer oder Eisen, oder einer Metalllegierung, insbesondere einer Aluminiumlegierung, einer Kupferlegierung oder einer Eisenlegierung besteht.

5. Wärmeableiteinleger nach einem der Ansprüche 1 bis 3, wobei die Einlegerheatpipe mit der thermoplastischen Zusammensetzung des Wärmeeinkoppelements umspritzt ist.

6. Wärmeableiteinleger nach einem der Ansprüche 1 bis 3 oder 5, wobei es sich bei der thermoplastischen Zusammensetzung um eine Zusammensetzung enthaltend ein Polycarbonat handelt.

7. Akkupack umfassend mindestens einen Wärmeableiteinleger nach einem der Ansprüche 1 bis 6.

8. Akkupack nach Anspruch 7, wobei der mindestens eine Wärmeableiteinleger des Akkupacks mit einem Akkupackkühlkörper verbunden ist.

9. Akkupack nach Anspruch 8, wobei der Akkupackkühlkörper mit mindestens einer Akkupackkühlkörperheatpipe verbunden ist.

10. Akkupack nach Anspruch 9, wobei die Akkupackkühlkörperheatpipe mit einem elektrothermischen Wandler verbunden ist.

11. Wärmeableiteinleger nach einem der Ansprüche 1 bis 4, wobei die Einlegerheatpipe mit einem elektrothermischen Wandler verbunden ist.

12. Akkupack nach Anspruch 10 oder Wärmeableiteinleger nach Anspruch 11, wobei es sich bei dem elektrothermischen Wandler um ein Peltierelement oder ein Thermoelement handelt.

13. Akkupack nach Anspruch 10 oder Wärmeableiteinleger nach Anspruch 11, wobei das Peltierelement einen Warmendkühlkörper aufweist.

14. Elektromobil, umfassend einen Wärmeableiteinleger nach einem der Ansprüche 1 bis 6 oder 11, oder einen Akkupack nach einem der Ansprüche 7 bis 10 oder 12 oder 13.

15. Verwendung einer thermoplastischen Zusammensetzung mit einer Wärmeleitfähigkeit in plane von mindestens 0,1 W/(m*K), bevorzugt von mindestens von 0,2 W/(m*K), besonders bevorzugt von mindestens von 0,5 W/(m*K) zur Ableitung von Wärme aus einem Akkupack.

16. Verwendung einer thermoplastischen Zusammensetzung nach Anspruch 15, **dadurch gekennzeichnet, dass** die thermoplastische Zusammensetzung einen spezifischer Durchgangswiderstand von über 10¹⁰ Ohm*m, bevorzugt von über 10¹² Ohm*m, besonders bevorzugt von über 10¹³ Ohm*m, aufweist.
